# EUROPEAN PATENT APPLICATION

(11) **EP 2 882 062 A1**
(43) Date of publication of application: **10.06.2015**
(21) Application number: 13828412.0
(22) Date of filing: 30.07.2013
(51) Int. Cl.: H02J 3/38

(54) **LINKAGE SYSTEM SWITCHING DEVICE AND POWER CONTROL SYSTEM**

(30) Priority: 06.08.2012 JP 2012174450
(71) Applicant: Kabushiki Kaisha Toshiba, Minato-ku Tokyo 105-8001 (JP)
(72) Inventor: KASAI, Chihiro, Tokyo 105-8001 (JP); SHINOHARA, Hirofumi, Fuchu-shi Tokyo 183-8511 (JP)
(74) Representative: Ekstedt, Måns
(86) International application number: PCT/JP2013/070586
(87) International publication number: WO 2014/024731

(57) **Abstract**

An interconnected system switching technology is provided which maintains, when a malfunction of a power system interconnected with a power generator occurs, power supply from the power generator by disconnecting the unstable power system causing the malfunction, thereby contributing to the stabilization of the power system. A device includes a malfunction detector 62 connected with a power generator 3 and a power system 1, also connected with a power control device 50 interconnected in accordance with a reference waveform created based on information input from the power system 1, and which detects a malfunction of the power system 1, and a connection switcher 63 which switches information for creating the reference waveform to information from an auxiliary system 2 other than information from the power system 1.

## Description

### TECHNICAL FIELD

The embodiments of the present disclosure relates to an interconnected system switching device and a power control system connected to system-interconnecting type distributed power sources.

### BACKGROUND ART

Distributed power sources are interconnected with a power system through a power control device with an inverter function like a power conditioner, and supply, together with the power system, power to power consuming utilities like loads. At this time, the power by the distributed power sources is converted by the power control device into a suitable power form for an interconnection with the power system.

At the voltage maintained by the power system, when the available power supply amount from the distributed power sources is less than the necessary power amount for the power consuming utilities, the shortfall effective power is supplied by the power system. When the available power supply amount from the distributed power sources is equal to the necessary power amount for the power consuming utilities, the power system supplies no effective power.

When the available power supply amount from the distributed power sources is larger than the necessary power amount for the power consuming utilities, and a tidal flow (reverse power flow) to the power system is permitted, the power control device causes the surplus power to reversely flow into the power system.

When no reverse power flow is permitted, the power control device controls and decreases the power input from the distributed power sources so as not to produce surplus power, thereby decreasing the output power by the power control device. In this case, the power system supplies no power to the power consuming utilities, and a condition in which no reverse power flow occurs is maintained.

The power control device includes a malfunction detector that detects system malfunctions, such as a blackout, a voltage change, and a frequency change occurred in the power system. When the malfunction detector detects a malfunction, the power control device decreases or shut off the output power input from the distributed power sources, thereby decreasing a load to the power system. Hence, the power system is protected.

When, for example, an accident occurs in the power system and the power supply therefrom is suspended, it becomes an isolated operation condition in which the power is supplied only from the distributed power sources to the power consuming utilities. A malfunction detector detects such an isolated operation, and immediately suspends the output by the power control device.

### CITATION LIST

### PATENT LITERATURES

Patent Document 1: JP 2790403 B
Patent Document 2: JP 2796035 B

### SUMMARY

### TECHNICAL PROBLEM

Meanwhile, when the power control device decreases or suspends the input voltage from the distributed power sources in accordance with a detection of malfunction, the power supply amount to the power consuming utilities may become insufficient relative to the necessary power amount. In this case, the power consuming utilities attempt to receive the shortfall power from the power system.

When, however, the power system suspends its output because of, for example, blackout, although the distributed power sources have a potential to supply power, all power supply to the power consuming utilities is suspended. In addition, when the power system does not suspend its output but is unstable, in addition to the originally supplied power, power by what corresponds to the shortfall is further supplied to the power consuming utilities from the power system. Hence, a load is applied to the power system, making the power system further unstable.

As explained above, when it becomes, unstable power system → output reduction by power control device → shortfall power to power consuming utilities → increase in power supply from power system, the frequency of the power system and the voltage thereof and the like decrease, resulting in a negative cycle of making the power system further unstable. Hence, a synchronous machine, etc., utilized in the power system loses the synchronization. This possibly causes a power system collapse.

The aforementioned technical problems are ignorable when the capacity of a solar power generation system or a fuel cell system is sufficiently smaller than the capacity of the power system. However, the solar power generation system and the fuel cell system, etc., are nowadays becoming common, and it is expected that the introduction of the power control system for an interconnection with the power system increases at an accelerate rate. This means that the ratio of the capacity of distributed power sources becomes remarkably large relative to the capacity of the power system, and in this case, the aforementioned technical problems becomes unignorable.

In addition, most distributed power sources utilize low-carbon natural energy introduced to reduce CO₂, and the power generation amount depends on the weather, etc. If it is possible to obtain a large power generation amount from the distributed power sources, when the power system becomes unstable, according to conventional configurations, it is necessary for the power control device to limit the supply amount or to suspend the supply. This is a large loss from the standpoint of an environment.

The embodiments of the present disclosure have been proposed to address the aforementioned technical problems, and it is an objective to provide a system interconnection technology that disconnects, when a malfunction occurs in a power system interconnected with a power generator, the unstable power system without limiting or suspending power supply from the power generator, thereby contributing to the stabilization of the power system.

### SOLUTION TO PROBLEM

To accomplish the above objective, an interconnected system switching device which is connected with a power control device, connected with a power generator and a power system, and interconnected in accordance with a reference waveform created based on information input from the power system. The interconnected system switching device includes the following:
(1) a malfunction detector detecting a malfunction of the power system; and
(2) a switcher switching the information for creating the reference waveform to an other information than the information from the power system when the malfunction detector detects a malfunction

### ADVANTAGEOUS EFFECTS

### BRIEF DESCRIPTION OF DRAWINGS

FIG. 1 is a block diagram illustrating an interconnected system switching device according to a first embodiment;
FIG. 2 is a block diagram illustrating an example configuration of a power control device according to the first embodiment;
FIG. 3 is an exemplary diagram illustrating a condition in which a malfunction of a power system is detected according to the first embodiment;
FIG. 4 is an exemplary diagram illustrating a condition in which a system connection is switched to an auxiliary system according to the first embodiment;
FIG. 5 is an exemplary diagram illustrating a condition in which a malfunction of the auxiliary system is detected according to the first embodiment;
FIG. 6 is an exemplary diagram illustrating a condition in which a system connection to the power system is recovered according to the first embodiment;
FIG. 7 is an exemplary diagram illustrating a condition in which whether or not a malfunction of a power system is resolved is determined according to a second embodiment;
FIG. 8 is an exemplary diagram illustrating a condition in which a system connection to the power system is recovered according to the second embodiment;
FIG. 9 is a block diagram illustrating an interconnected system switching device according to a third embodiment;
FIG. 10 is an exemplary diagram illustrating a condition in which a malfunction of a power system is detected according to the third embodiment;
FIG. 11 is an exemplary diagram illustrating a system connection is switched to an auxiliary system according to the third embodiment;
FIG. 12 is an exemplary diagram illustrating a condition in which a malfunction of an auxiliary system is detected according to the third embodiment;
FIG. 13 is an exemplary diagram illustrating a condition in which a normal system is determined according to the third embodiment;
FIG. 14 is an exemplary diagram illustrating a condition in which a system connection is switched to the auxiliary system is performed according to the third embodiment;
FIG. 15 is a block diagram illustrating an interconnected system switching device according to a fourth embodiment;
FIG. 16 is a block diagram illustrating an example configuration of a power control device according to the fourth embodiment;
FIG. 17 is an exemplary diagram illustrating a condition in which a malfunction of a power system is detected according to the fourth embodiment; and
FIG. 18 is an exemplary diagram illustrating a condition in which a system connection is switched to a virtual system according to the fourth embodiment.

### DESCRIPTION OF EMBODIMENTS

[1. First Embodiment]

### [Configuration]

### [Distributed Power Source System]

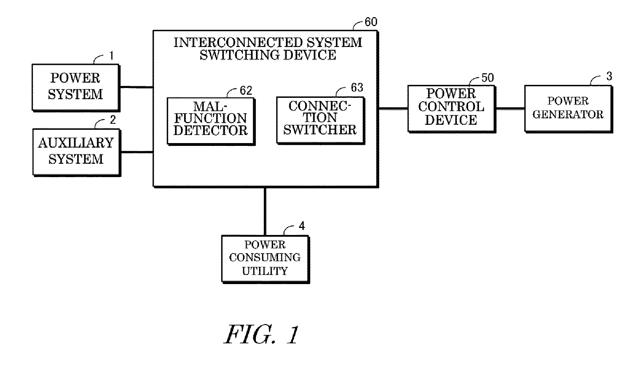

A configuration of a distributed power source system according to this embodiment will be explained with reference to FIG. 1. This system includes a power control system. The power control system includes a power system 1, an auxiliary system 3, a power generator 3, and a power consuming utility 4 which are connected via feed lines.And the power control system includes a power control device 50 and an interconnected system switching device 60.

The power system 1 converts power generated by a power generation plant, and transmits such a power. An example power system applicable is a general commercial power system. The auxiliary system 2 is a power source system (second power system) independent from the power system 1. This auxiliary system 2 includes a different power system from the power system 1, a power storage system, and a power generation system. Example power sources utilized in the auxiliary system 2 are various power generators or a battery.

An example auxiliary system 2 applicable is a backup power system generally installed in large-scale facilities, such as a building and a factory, and a data center needing the reliability of a power source. In addition, an AC power generation device like a diesel power generation device, a DC power generation device connected through a power conversion device like an inverter, and a battery are also applicable to the auxiliary system 2.

The power generator 3 is a distributed power source interconnectable with the power system 1. The power generator 3 includes devices that convert renewable energy, such as solar light, wind power, and tidal power, into electric power. In addition, the power generator 3 includes a fuel cell battery and a household power generation device.

The power consuming utility 4 is a device that consumes power supplied from the power system 1 and the power generator 3 or from the auxiliary system 2 and the power generator 3. This power consuming utility 4 includes general power loads. The power consuming utility 4 includes electric equipment, such as a lighting device and an air conditioner.

The power control device 50 is connected to the power generator 3, boosts the DC voltage output by the power generator 3 and converts the DC power into AC power, thereby being interconnected with the power system 1. This power control device 50 includes a DC-DC converter function for DC voltage transformation, an inverter function for AC conversion, and a power system protection function, such as a function equivalent to an overvoltage relay, and a function equivalent to a shortfall frequency relay. When the power generator 3 is an AC type, the power control device 50 converts the frequency of the AC power output by the power generator 3 and the voltage thereof, thereby being interconnected with the power system 1.

In addition, the power control device 50 includes a detector that detects a malfunction of a system in order to implement the power system protection function. This detector detects a malfunction of the power system 1 based on a change in voltage, current and frequency, etc., of the power system 1. As to the detection of malfunction, as will be discussed later, various schemes are applicable.

### [Interconnected System Switching Device]

The interconnected system switching device 60 of this embodiment is connected to a feed line to the power consuming utility 4 located between the power system 1, the auxiliary system 2 and the power control device 50. This interconnected system switching device 60 may be configured in a distribution switchboard or in the power control device 50.

The interconnected system switching device 60 includes a malfunction detector 62 and a connection switcher 63 (switcher). The malfunction detector 62 detects the presence/absence of a malfunction of the power system 1 based on a change in voltage, current and frequency, etc., of the power system 1. As to the detection scheme of malfunction by the malfunction detector 62, various schemes are applicable as will be discussed later. In addition, the interconnected system switching device 60 may be connected to an external system like a host power management system through an unillustrated network, and detect the malfunction of the power system 1 or the auxiliary system 2 based on information or an instruction from the external system. Such a configuration is to detect, not only apparent malfunction as explained above, but also information on a latent factor causing a malfunction like thunder clouds coming close to the wirings of the power system 1, and to detect such information as a malfunction.

When the power control device 50 and the interconnected system switching device 60 are constructed separately from each other, and a predetermined threshold is set to detect a malfunction, the threshold for the malfunction detector 62 may be set smaller than the threshold for the detector of the power control device 50 or the detection time period of the malfunction detector 62 may be set shorter than that of the detector of the power control device 50. This enables the malfunction detector 62 to determine a malfunction at a lower stage than that of a normal malfunction detection by the power control device 50.

The connection switcher 63 is connected to both feed lines from the power system 1 and the auxiliary system 2, and switches the power supply source to the power consuming utility 4 from the power system 1 to the auxiliary system 2 when the malfunction detector 62 detects a malfunction. In addition, the connection switcher 63 enables a recovery thorough a switching from the auxiliary system 2 to the power system 1. An example connection switcher 63 applicable is a breaker.

In this embodiment, the power control device 50 is interconnected with the power system 1 in accordance with a reference waveform created based on information input from the power system 1. This reference waveform is a waveform becoming a reference for PWM pulses driving an inverter circuit. Information that is a source to create a reference waveform (information for creating a reference waveform) widely includes signals to create a waveform reflecting the phase of the power system. Hence, such information includes the waveform signal, frequency signal, and phase signal of the voltage detected from the power system 1 or the auxiliary system 2, effective power, reactive power, and the like. Accordingly, the power system 1 and the auxiliary system 2 can be considered as a source of information for creating a reference waveform. When the maximum value (or minimum value) of the voltage, and time information on a zero point or time information on a point at which a bias from zero to positive (or to negative) is applied are known, a reference waveform can be created based on those pieces of information. Accordingly, such pieces of information are also included in information for creating a reference waveform.

According to this configuration, when an electrical connection to the interconnected power system 1 or auxiliary system 2 is switched by the connection switcher 63, the source of the information for creating a reference waveform is also switched, and thus the connection switcher 63 also functions as a source switch.

### [Specific Example of Power Control System]

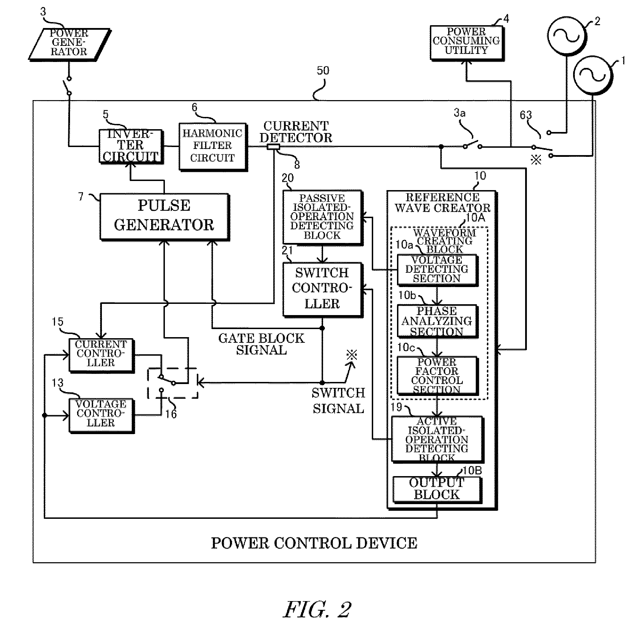

An example power control system configuring the aforementioned interconnected system switching device 60 as one of the functions of the power control device 50 will be explained with reference to FIG. 2. In this example, the malfunction detector 62 of the interconnected system switching device 60 is common to the detector of the power control device 50.

This power control device 50 is provided between the power generator 3 and the power system 1, the auxiliary system 2. The connection switcher 63 is provided between the power control device 50 and the power system 1, the auxiliary system 2. In addition, a connection switch 3a is provided at the downstream side of the connection switcher 63 relative to the power system 1, and thus the power control device can be electrically disconnected from the power system. Still further, in general, the power consuming utility 4 is connected between the connection switcher 63 and the connection switch 3a.

The power control device 50 includes an inverter circuit 5 to convert DC power generated by the power generator 3 into AC power and to transmit the converted AC power to the power system 1. As to a DC-DC converter for DC voltage transformation, the explanation thereof will be omitted.

The inverter circuit 5 is connected to a pulse generator 7. The pulse generator 7 generates, in accordance with a reference waveform, PWM pulses in consideration of a present current value detected by a current detector 8, thereby driving the inverter circuit 5. The reference waveform is created by a reference waveform creator 10. The reference waveform creator 10 includes a waveform creating block 10A and an output block 10B. The reference waveform creator 10 of this embodiment includes an active isolated-operation detecting block 19 to be discussed later, but this block is not essential.

The waveform creating block 10A creates a waveform based on information that is a source of a reference waveform. The created waveform has the same phase as that of the reference waveform, thus can be also referred to as a synchronized signal. This waveform creating block 10A includes a voltage detecting section 10a, a phase analyzing section 10b, and a power factor control section 10c. The voltage detecting section 10a detects a waveform of a system voltage. The phase analyzing section 10b analyzes a phase from the waveform of the system voltage detected by the voltage detecting section 10a. The power factor control section 10c controls the power factor based on a relationship with the phase of a current.

Various pieces of information are available as a source of a reference waveform. In this embodiment, such information is the waveform of the system voltage of the power system 1 or the auxiliary system 2. As will be discussed in a later embodiment, however, such information may be a signal created by simulating a waveform (synchronized signal) to be created by the waveform creating block 10A. In addition, such information may be a signal created by simulating a waveform of the system voltage. The output block 10B biases the waveform (synchronized signal) created by the waveform creating block 10A, and outputs the biased waveform.

The power control device 50 further includes the active isolated-operation detecting block 19 and a passive isolated-operation detecting block 20. The passive isolated-operation detecting block 20 is directly connected with the voltage detecting section 10a, while the active isolated-operation detecting block 19 is present between the waveform creating block 10A and the output block 10B as explained above.

The active isolated-operation detecting block 19 and the passive isolated-operation detecting block 20 are connected with a switch controller 21. This switch controller 21 controls the gate block of the pulse generator 7, the switching of the connection switcher 63, and that of a selector switch 16. Respective functions of the selector switch 16, a current controller 15, and a voltage controller 13 will be explained in a fourth embodiment.

The active isolated-operation detecting block 19 and the passive isolated-operation detecting block 20 detect an isolated operation of the power generator 3. The term isolated operation means a condition in which, when the power system 1 interconnected with the power generator 3 is disconnected from a system power source due to, for example, an accident, the power generator 3 maintains the operation in solo, and keeps supplying power to the system load. In other words, the term isolated operation means a condition in which, while the power system 1 is suspending power supply, the power generator 3 is not suspended but maintains a balance between the power generator 3 an the load.

The active isolated operation detection scheme is to detect, by causing the reference waveform to have a characteristic of applying a specific fluctuation to an output at the time of an occurrence of an isolated operation, that fluctuation. For example, the active isolated-operation detecting block 19 controls the reference waveform creator 10 so as to change the phase of the output current relative to the system voltage in accordance with the frequency of the system voltage and the change rate thereof detected by the voltage detecting section 10a. Through such a control, the active isolated-operation detecting block 19 changes reactive power output by the power control device 50, assists a change in frequency, and determines whether or not a frequency change rate is excessive based on a comparison with a predetermined threshold.

The passive isolated operation detection scheme is to detect a change in voltage detected across the system. More specifically, the passive isolated-operation detecting block 20 monitors the waveform of an output voltage of the inverter circuit 5 detected by the voltage detecting section 10a, and determines whether or not the voltage, the frequency, and the phase of the voltage waveform, etc., are out of a normal range based on a comparison with a predetermined threshold.

The active isolated-operation detecting block 19 and the passive isolated-operation detecting block 20 instructs, through the switch controller 21, the gate block and a connection switcher 63 to perform a system connection switching when detecting the isolated operation of the power generator 3. That is, the active isolated-operation detecting block 19 and the passive isolated-operation detecting block 20 correspond to the malfunction detector 62 that switches the connection switcher 63 in accordance with a detection of malfunction.

### [Action]

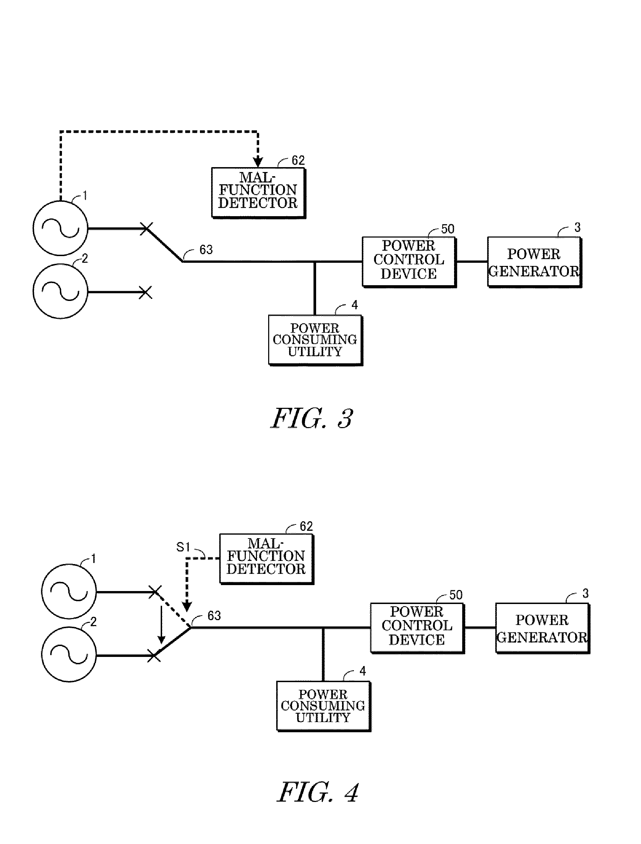

The action according to this embodiment as described above will be explained with reference to FIGS. 3 to 8. First, in a normal condition, as illustrated in FIG. 3, the connection switcher 63 is in connection with the power system 1. Next, the power control device 50 interconnects the power generator 3 with the power system 1 in accordance with the reference waveform created based on information (waveform of system voltage) input from the power system 1.

Hence, the power consuming utility 4 is supplied with necessary power from the power generator 3 and also the power system 1. When the power from the power generator 3 becomes excessive at the power consuming utility 4, the power control device 50 decreases the output or the surplus power is caused to reversely flow into the power system 1.

Next, an explanation will be given of a case in which a malfunction like a blackout occurs in the power system 1. In this case, the malfunction detector 62 detects a malfunction of the power system 1. Upon this detection, as illustrated in FIG. 4, the connection switcher 63 switches the power supply source (a source of information that is a source to create the reference waveform) to the auxiliary system 2 based on a signal S1 from the malfunction detector 62.

For example, in the case of a specific example illustrated in FIG. 2, the active isolated-operation detecting block 19 or the passive isolated-operation detecting block 20 detects an isolated operation based on a voltage detected by the voltage detecting section 10a. In this case, the switch controller 21 outputs a switch signal to the connection switcher 63. Hence, the connection switcher 63 switches a system connection.

As explained above, when the connection switcher 63 switches a system connection, the power control device 50 interconnects the power generator 3 with the auxiliary system 2 in accordance with the reference waveform created based on the waveform of a system voltage input from the auxiliary system 2. Therefore, the power supply to the power consuming utility 4 can be maintained.

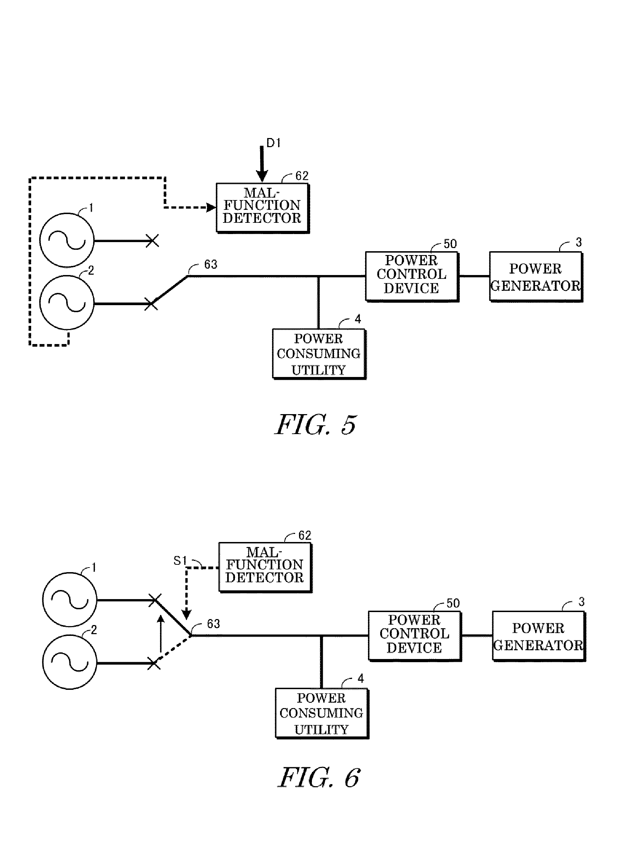

Since the malfunction detector 62 detects a malfunction at the power-system side of the connection switcher 63, after the system connection switching, as illustrated in FIG. 5, the malfunction detector 62 becomes able to detect a malfunction at the auxiliary-system-2 side.

Therefore, as illustrated in FIG. 6, the connection switcher 63 can switch again the system connection from the auxiliary system 2 to the power system 1 based on the signal S1 from the malfunction detector 62. For example, as illustrated in FIG. 5, such a system connection switching may be performed only when the malfunction detector 62 determines that the power system 1 is recovered to a normal condition based on information D1 from a host system.

### [Advantageous Effects]

According to this embodiment described above, the interconnection carried out by the power system 1 prior to an occurrence of a malfunction is maintained by the auxiliary system 2. Hence, the power control device 50 can maintain the operation without suspending an output. In addition, the power supply to the power consuming utility 4 can be continuously maintained.

Since it is unnecessary for the power control device 50 to restrict or suspend the power supply, low-carbon energy is not wasted.

In addition, the power generator 3 and the power consuming utility 4 are disconnected from the power system 1 that has become unstable. Hence, a negative cycle of a system that possibly causes a large-scale system collapse can be prevented. In particular, when the malfunction detection threshold for the malfunction detector 62 is set to be smaller than the malfunction detection threshold for the power control device 50, the switching system connection is enabled prior to an occurrence of a usual malfunction. That is, when the possibility reaching an occasion that negatively affects the system is high, such an occasion can be prevented beforehand.

### [2. Second Embodiment]

### [Configuration]

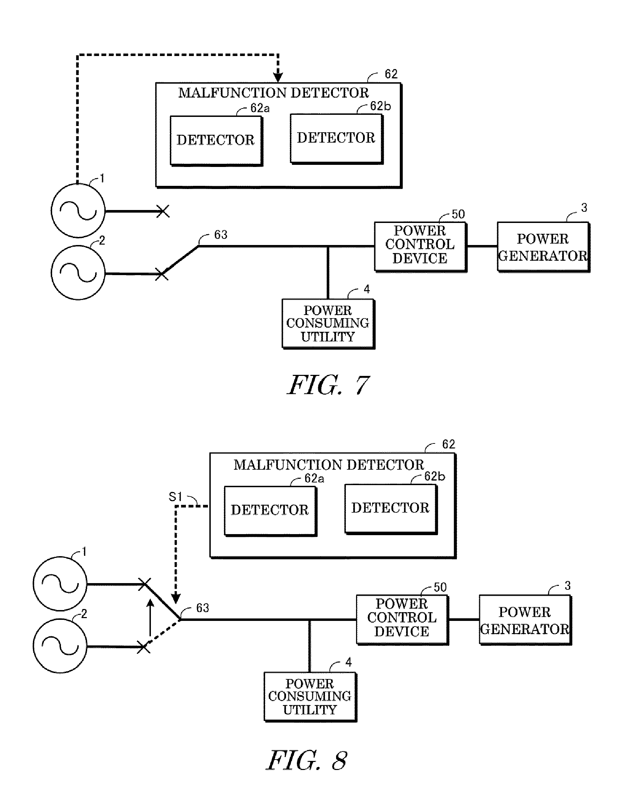

This embodiment basically employs the same configuration as that of the first embodiment. In this embodiment, however, as illustrated in FIG. 7, as the malfunction detector 62, detectors 62a, 62b are provided for respective feed lines from the power system 1 and the auxiliary system 2 to the connection switcher 63.

### [Action]

An action according to this embodiment described above will be explained with reference to FIGS. 7 and 8. First, when a malfunction of the power system 1 occurs, as explained above, the connection switcher 62 switches the system connection to the auxiliary system 2.

In this condition, as illustrated in FIG. 7, the detector 62a detects that the malfunction of the power system 1 is resolved. In this case, as illustrated in FIG. 8, based on a signal S1 from the detector 62a, the connection switcher 63 returns the system connection to the power system 1.

### [Advantageous Effects]

According to this embodiment explained above, when it is desirable that the auxiliary system 2 should be positioned simply as a backup because of, for example, the smaller capacity than that of the power system 1, if the malfunction of the power system 1 is resolved, the connection switcher 63 is automatically connected again with the power system 1. Hence, the power can be supplied from the power system 1 as much as possible. In addition, when it is desirable to preferentially utilize the power system 1 that is more stable, the power system 1 to be interconnected can be selectively determined.

### [3. Third Embodiment]

### [Configuration]

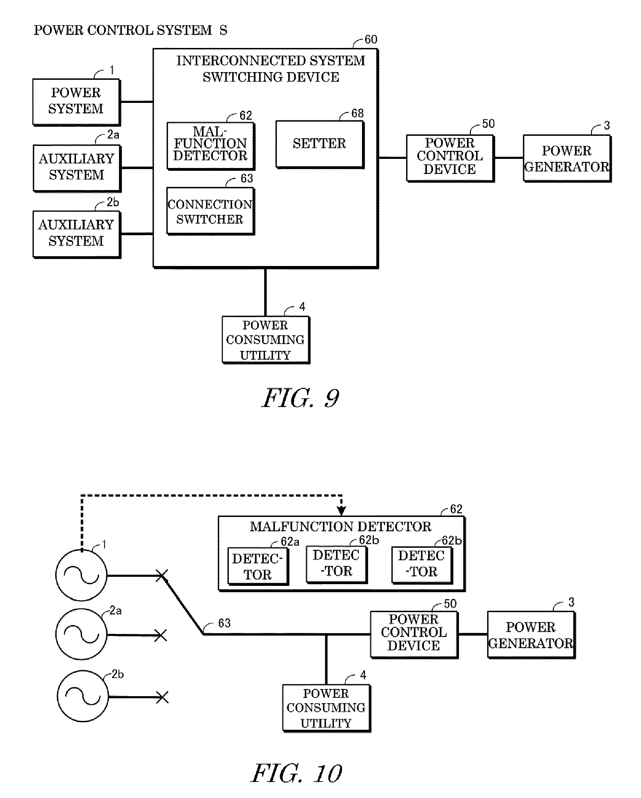

This embodiment basically employs the same configuration as that of the first embodiment. In this embodiment, however, as illustrated in FIG. 9, the connection switcher 63 is connected with multiple auxiliary systems 2a, 2b. The connection switcher 63 is capable of switching the power supply source to the power consuming utility 4 from the power system 1 to either one of the auxiliary systems 2a, 2b.

In addition, like the second embodiment, as illustrated in FIG. 10, as the malfunction detector 62, detectors 62a, 62b, and 62c are provided for the respective feed lines from the power system 1, the auxiliary systems 2a, 2b to the connection switcher 63, thereby monitoring the respective conditions of the power system 1 and the auxiliary systems 2a, 2b.

Still further, according to this embodiment, as illustrated in FIG. 9, the interconnected system switching device includes a setter 68 that sets the preference order of the auxiliary systems 2a, 2b, to be switched by the connection switcher 63. This preference order may be static and set in advance or may be dynamic in accordance with a situation. For example, an arbitrary preference order can be set in advance in accordance with the scale of the system, available power, a kind, such as a commercial system, a power generation system or a battery, and a stability based on past statistics, etc. In addition, the most stable system estimated instantaneously or sequentially based on the stability of a voltage and that of a frequency, and the like, may be given with a preference. In the case of the systems having substantially equal stability, the system causing the power costs determined statically or dynamically to be the most inexpensive may be given with a preference.

### [Action]

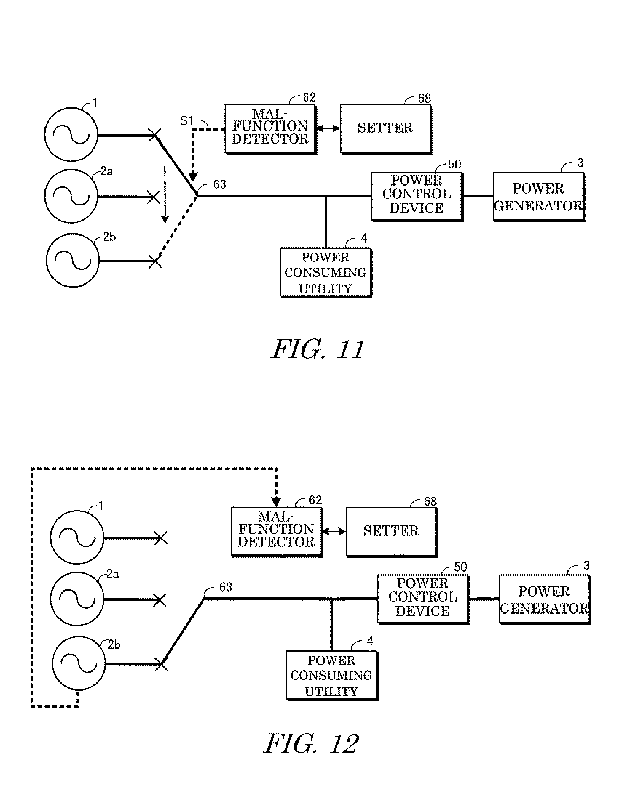

An action of this embodiment described above will be explained with reference to FIGS. 10 to 14. First, as illustrated in FIG. 10, when a malfunction of the power system 1 occurs, the connection switcher 63 switches a system connection. This system connection switching is based on the preference order set in the setter 68. For example, as illustrated in FIG. 11, the system connection is switched to the auxiliary system 2b.

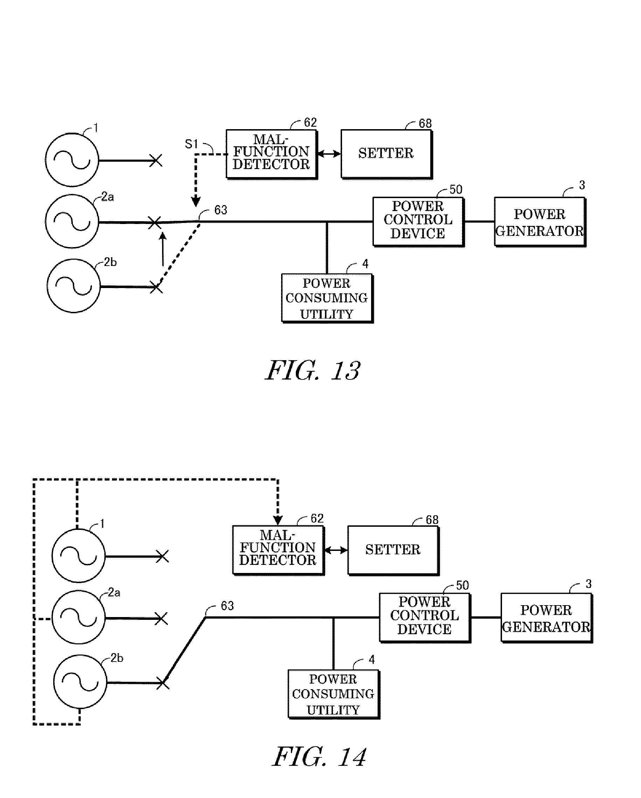

In addition, when a malfunction of the auxiliary system 2b occurs, as illustrated in FIG. 12, the connection switcher 63 further switches a system connection. This system connection switching is also based on the preference order set in the setter 68. For example, as illustrated in FIG. 13, the connection is switched to the auxiliary system 2a. In this way, the power control device 50 maintains power supply to the power consuming utility 4 by interconnecting the power generator 3 with the auxiliary system 2a.

When the preference order is set dynamically, as illustrated in FIG. 14, the setter 68 sets the highest preference order for the system determined by the malfunction detector 62 as being the most stable system based on the voltage, frequency, and current of each system and an external instruction, etc. Hence, the connection switcher 63 can switch the system connection to the most stable system.

### [Advantageous Effects]

According to this embodiment described above, connections to the multiple systems 2a, 2b are enabled, and thus the system can have a flexibility, and the possibility of maintaining the power supply is enhanced. In addition, the system connection can be switched to a system highly possibly stable or actually stable, and thus the power generator 3 can be continuously operated further stably.

When the auxiliary systems 2a, 2b are systems that have different kinds of effects originating from external factors, the possibility that the stable system is present can be enhanced. Still further, the number of auxiliary systems is not limited to two, and may be equal to or greater than three. This further enhances the possibility of securing a stable system.

### [4. Fourth Embodiment]

### [Configuration]

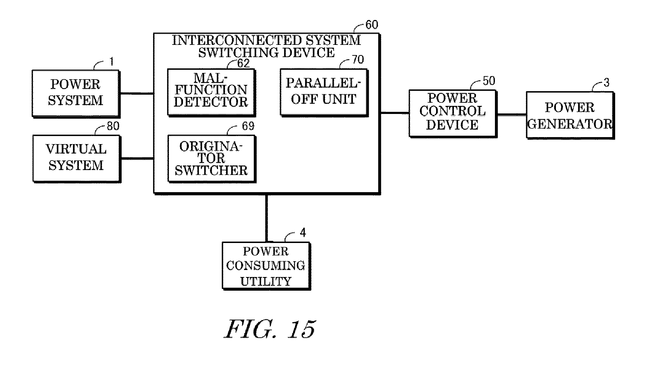

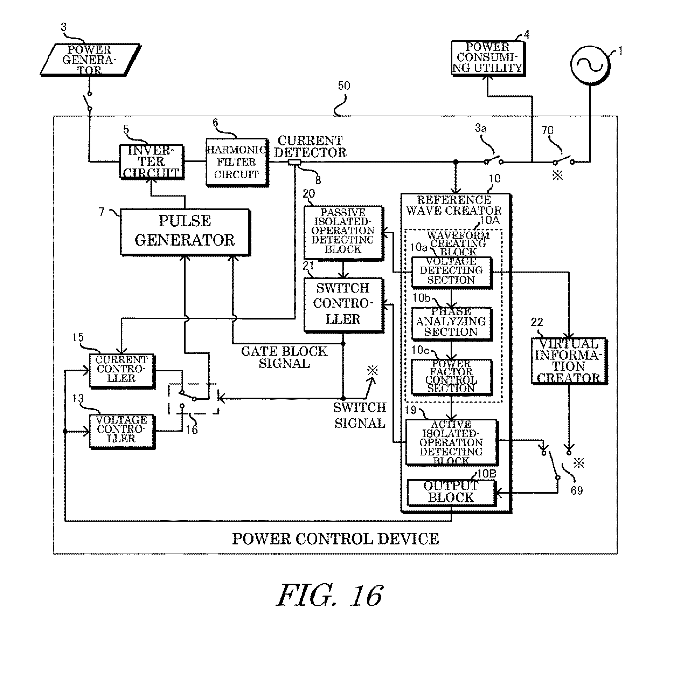

A configuration according to this embodiment will be explained with reference to FIGS. 15 and 16. As illustrated in FIG. 15, an interconnected system switching device 60 of this embodiment is connected with a virtual system 80. This virtual system 80 outputs virtual information that simulates information to be output by the power system 1 or information for creating a reference waveform based on the former information. That is, the virtual system 80 creates and outputs simulated information for creating the reference waveform.

For example, the virtual system 80 stores, in a memory like a buffer, pieces of information from the power system 1 in a normal condition having no malfunction, and outputs a virtual synchronized signal created based on the stored information after an occurrence of a malfunction.

Next, according to this embodiment, a source switcher 69 (switcher) that switches the source of information to be input to the power control device 50 from the power system 1 to the virtual system 80 when the malfunction detector 62 detects a malfunction. The source switcher 69 thus switches the source of information for creating the reference waveform.

In addition, a parallel-off unit 70 is provided on the feed line between the power control device 50 and the power system 1. The parallel-off unit 70 is a breaker that parallels off the power system 1 when the malfunction detector 62 detects a malfunction. According to this configuration, the parallel-off unit 70 corresponds to the connection switcher 63 of the foregoing embodiments.

In this case, a further specific example of the interconnected system switching device 60 connected with the virtual system 80 will be explained with reference to FIG. 16. FIG. 16 illustrates the power control device 50 basically employing the same configuration as that of the first embodiment illustrated in FIG. 2.

According to this embodiment, however, a virtual information creator 22 is connected between the voltage detecting section 10a and the output block 10B in parallel with the phase analyzing section 10b, the power factor control section 10c, and the active isolated-operation detecting block 19. The virtual information creator 22 creates virtual information for creating a reference waveform. For example, the virtual information creator 22 stores the waveform signal of a voltage of the power system 1 in a normal condition, and creates a virtual waveform (synchronized signal) based on the stored data. That is, according to this example, the virtual information creator 22 creates a waveform (synchronized signal) simulating the waveform to be created by the waveform creating block 10A in a normal condition. This virtual information creator 22 corresponds to the virtual system 80.

The source switcher 69 is provided between the virtual information creator 22, the active isolated-operation detecting block 19 and the output block 10B. The source switcher 69 has a function of switching a source of information for creating a waveform. In addition, the selector switch 16 is provided between the pulse generator 7 and the voltage controller 13, the current controller 15. In response to a switch signal from the switch controller 21, the source switcher 69 switches the connection to the reference waveform creator 10 from the active isolated-operation detecting block 19 to the virtual information creator 22, and the selector switch 16 switches the connection to the pulse generator 7 from the current controller 15 to the voltage controller 13.

Still further, the parallel-off unit 70 is provided between the power control device 50 and the power system 1. This parallel-off unit 70 parallels off the power system 1 in response to the switch signal from the switch controller 21.

### [Action]

This embodiment described above has the following action. First, in a normal condition, the parallel-off unit 70 is in connection with the power system 1, and the power consuming utility 4 is supplied with necessary power from the power generator 3. In addition, when there is surplus power which is generated by the power generator 3 and which is not consumed by the power consuming utility 4, the surplus power is caused to reversely flow in the power system 1. At this time, the source switcher 69 is connected to the power system 1 (active-isolated-operation-detecting-block-19 side) that is a source of information for creating a reference waveform, and the pulse generator 7 is generating pulse signals in accordance with an instruction from the current controller 15.

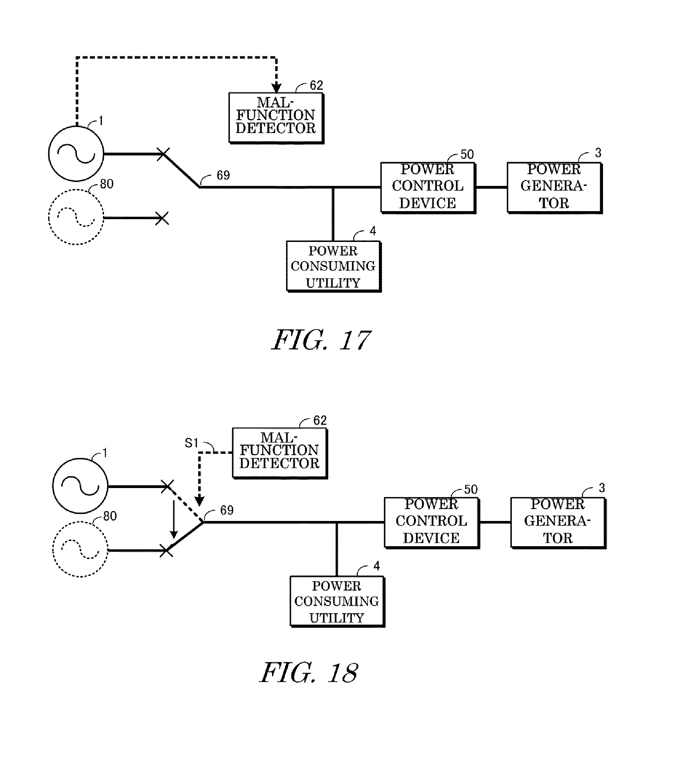

As illustrated in FIG. 17, when the malfunction detector 62 detects a malfunction of the power system 1, as illustrated in FIG. 18, the source switcher 69 switches the source of the information for creating the reference waveform from the power system 1 to the virtual system 80, and the selector switcher 16 switches the connection to the pulse generator 7 from the current controller 15 to the voltage controller 13. In addition, the parallel-off unit 70 parallels off the power system 1.

For example, according to the specific example illustrated in FIG. 16, the output block 10B biases the synchronized signal created and output by the virtual information creator 22, and outputs the biased signal as the reference waveform. This allows, as illustrated in FIGS. 17 and 18, the power control device 50 to be presumed as being interconnected with the virtual system 80 by allowing the virtual information creator 22 to create the synchronized signal that can be created based on information from the auxiliary system 2 in the first embodiment. Hence, the power control device 50 can keep supplying power from the power generator 3 like the interconnected condition.

The power control device 50 switches the selector switch 16 to the voltage-controller-13 side, thereby controlling a voltage.

This is because of the following reason. In a normal condition, the voltage to be supplied to the power consuming utility 4 is given by the interconnected system. Hence, when there is the power system 1 interconnected in actuality, it is unnecessary to autonomously set the voltage.

However, during an operation in accordance with the reference waveform created based on a virtual synchronized signal, there is no real power system 1 that sets a voltage to be supplied. Accordingly, it is necessary to autonomously maintain the voltage so as not to fluctuate in accordance with the condition of the power consuming utility 4. Therefore, when the operation is switched to an operation condition based on the reference signal created on the basis of the virtual synchronized signal, a switching to perform a voltage control is carried out.

### [Advantageous Effects]

According to this embodiment described above, the power control device 50 can maintain power supply from the power generator 3 using the reference signal based on a virtual synchronized signal simulating the synchronized signal to be generated by the power system 1 prior to an occasion of a malfunction. Hence, no power supply to the power consuming utility 4 is prevented. In addition, the parallel-off unit 70 disconnects the power generator 3 and the power consuming utility 4 from the power system 1 becoming unstable. Accordingly, it is unnecessary to provide additional facilities like an auxiliary system, but the same advantageous effects as those of the aforementioned embodiments can be accomplished.

The power supplied to the power consuming utility 4 is limited to the power output by the power generator 3. However, the power supply to the power consuming utility 4 can be maintained by the power control device 50 only. Accordingly, it is unnecessary to prepare in advance an actual system that supplies power. Hence, the same advantageous effects as those of the first embodiment can be accomplished by only small-scale power facilities, thereby saving costs and installation space.

### [5. Other Embodiments]

The present disclosure is not limited to the aforementioned embodiments.
(1) After the system connection is switched from the power system to the auxiliary system, it is not always necessary to return the system connection to the power system. When the auxiliary system is holding a sufficient power amount, the power supply from the auxiliary system may be maintained. When the system connection is returned to the power system, the return timing can be set within a time slot at which the power consumption amount by the power consuming utility is little.
(2) It is not necessary for the auxiliary system to be less advantageous than the power system in power supply amount and stability. The auxiliary system can be utilized when this auxiliary system can stably supply substantially same or larger power than the power system.
(3) The embodiment of the present disclosure is applicable in a case in which no power consuming utility is present. For example, the embodiment of the present disclosure is applicable to a case in which all power supplied from the power generator is caused to reversely flow. In this case, the reverse flow can be maintained by switching the interconnection with the power system to the auxiliary system.
(4) Information for creating a reference waveform among pieces of the information output by the power system, the auxiliary system, and the virtual system is not limited to the exemplified one in the aforementioned embodiments. For example, the virtual information creator 22 of the fourth embodiment described above may output, to the phase analyzing section 10b, a voltage waveform signal simulating a waveform signal of the system voltage recorded in the memory like a buffer. In this case, the source switcher 69 switches an output source of the voltage waveform to be input to the phase analyzing section 10b from the voltage detecting section 10a to the virtual information creator 22. In addition, the virtual information creator 22 may output information analyzed by the phase analyzing section 10b to the power factor control section 10c. In this case, the source switcher 69 switches the output source of the voltage waveform to be input to the power factor control section 10c from the phase analyzing section 10b to the virtual information creator 22. As explained above, the reference waveform can be created when information on the maximum value (or minimum value) of the voltage, time information on the zero point or time information at which a bias from zero to positive (or negative) is applied are known.
(5) The interconnected system switching device may be constructed in a distribution switchboard and separately from a PCS. In addition, as is exemplified in FIGS. 2 and 16, a system having the power control device and the interconnected system switching device integrated with a PCS can be constructed. All of or some of components of the power control device and the interconnected system switching device can be implemented by a computer under the control of a predetermined program. The program in this case physically utilizes the hardware resources of the computer to execute the respective processes described above.
   A method, a program, and a recording medium having stored therein the program for executing the respective processes described above are also the forms of the present disclosure. Setting of a process range by hardware and a process range by a software including the program is not limited to any particular configuration. Any one of the aforementioned components may be realized as a circuit that executes the own process.
(6) As to the malfunction detection schemes by the malfunction detector and the detector, all schemes available currently or in future are applicable. For example, example detection schemes of the active isolated-operation detecting block are a frequency shift scheme, a slip-mode frequency shift scheme, an effective power fluctuation scheme, a reactive power fluctuation scheme, and a load fluctuation scheme. In addition, example detection schemes of the passive isolated-operation detecting block are voltage-phase jump detection, three-dimensional harmonic strain rapid increase detection, and frequency change rate detection.
(7) Several embodiments of the present disclosure were explained in this specification, but those embodiments are merely presented as examples, and are not intended to limit the scope of the present disclosure. More specifically, a combination of the first to fourth embodiments in whole or in part is also within the scope of the present disclosure. The aforementioned embodiments can be carried out in other various forms, and various omissions, replacements, and modifications can be made without departing from the scope of the present disclosure. Such embodiments and modifications thereof are within the scope and spirit of the present disclosure, and are also within the scope of the present disclosure as recited in the appended claims and within the equivalent range thereto.

## Claims

1. An interconnected system switching device which is connected with a power control device, connected with a power generator and a power system, and interconnected in accordance with a reference waveform created based on information input from the power system, the interconnected system switching device comprising:
a malfunction detector detecting a malfunction of the power system; and
a switcher switching the information for creating the reference waveform to an other information than the information from the power system when the malfunction detector detects a malfunction.

2. The interconnected system switching device according to claim 1, wherein the other information than the information from the power system is information input from a second power system different from the power system.

3. The interconnected system switching device according to claim 2, wherein a plurality of the second power systems are present.

4. The interconnected system switching device according to claim 3, further comprising a setter setting a preference order of switching by the switcher to any one of the pieces of information from the plurality of second power systems.

5. The interconnected system switching device according to any one of claims 1 to 4, wherein when the malfunction detector determines that a malfunction of the power system is resolved, the switcher returns the information for creating the reference waveform to the information from the power system.

6. The interconnected system switching device according to claim 1, wherein the other information than the information from the power system is information from a virtual power system simulating the information under a condition which no malfunction is detected by the malfunction detector, for creating the reference waveform.

7. The interconnected system switching device according to any one of claims 1 to 6, wherein:
a threshold is set for the malfunction detector to detect a malfunction of the power system based on the information for creating the reference waveform; and
the threshold is smaller than a threshold for the power control device to suspend power supply.

8. A power control system comprising:
a power control device interconnecting a power generator with a power system in accordance with a reference waveform;
a malfunction detector detecting a malfunction of the power system; and
a switcher switching information for creating the reference waveform to an other information than information from the power system when the malfunction detector detects a malfunction.

9. The power control system according to claim 8,
wherein the power generator is distributed power sources connected to the power control device.

10. The interconnected system switching device according to claim 2, wherein the switcher switches the information for creating the reference waveform to information from either one of the power system and the second power system based on a stability or a power cost.
